Europäisches Patentamt

European Patent Office

Office européen des brevets

(11) Publication number: **0 309 584**
**A1**

# EUROPEAN PATENT APPLICATION

published in accordance with Art. 158(3) EPC

(21) Application number: 87907674.3

(22) Date of filing: **19.11.87**

Data of the international application taken as a basis:

(86) International application number:
**PCT/JP 87/00896**

(87) International publication number:
**WO 88/03862 (02.06.88 88/12)**

(51) Int. Cl.⁴: **B 29 C 45/67, B 29 C 45/80**

(30) Priority: **19.11.86 JP 2761/85**

(43) Date of publication of application: **05.04.89**
**Bulletin 89/14**

(84) Designated Contracting States: **DE FR GB IT**

(71) Applicant: **Aoki, Katashi, 6037 Ohazaminamijo
Sakakimachi, Hanishina-gun Nagano-ken 389-06 (JP)**

(72) Inventor: **Aoki, Katashi, 6037 Ohazaminamijo
Sakakimachi, Hanishina-gun Nagano-ken 389-06 (JP)**

(74) Representative: **Twelmeier, Ulrich, Dipl.Phys. et al,
Patentanwälte Dr. Rudolf Bauer Dipl.-Ing.Helmut
Hubbuch, Dipl.Phys. Ulrich Twelmeier Westliche
Karl-Friedrich-Strasse 29-31, D-7530 Pforzheim (DE)**

(54) **CLAMPING MECHANISM FOR INJECTION MOLDING MACHINES.**

(57) Clamping mechanism for an injection molding machine wherein the outflow of the pressure oil at the time of opening an closing of a mold is not limited by the diameter of a valve or the like in a pipe and a hydraulic circuit even when the diameter of a clamping cylinder is large, and a decrease, which is ascribed to a hydraulic resistance, in the mold opening and closing speeds can be prevented. The clamping cylinder, in which the inner diameter of a rear chamber therein is set larger than that of a front chamber therein to form a clearance between the circumferential wall of the rear chamber and a piston, is provided with a large-diameter passage extending between the front and rear chambers in the cylinder, the hydraulic circuit being connected to that portion of this passage which is on the side of the rear chamber in the cylinder, a valve member for opening and closing that portion of the passage which is on the side of the front chamber in the cylinder being provided together with a hydraulic operating unit.

SPECIFICATION

1. TITLE OF THE INVENTION

MOLD CLAMING DEVICE FOR AN INJECTION MOLDING MACHINE

2. FIELD OF THE ART

This invention relates to a mold clamping device for an injection molding machine used for molding synthetic resins.

3. BACKGROUND OF THE INVENTION

As means for reducing hydraulic resistance at the time of opening and closing a mold, a mold clamping device has been known by Japanese Patent Application Laid-Open No. 60-143,915 wherein an inner diameter of a cylinder front chamber is formed to be larger than an inner diameter of a cylinder rear chamber, and a flowing clearance for pressure oil is formed between the peripheral wall of the cylinder rear chamber and a piston.

In the above-described conventional mold clamping device, the hydraulic resistance within the cylinder is reduced by the provision of the flowing clearance in the periphery of the piston, but a large amount of pressure oil becomes necessary during movement of a mold clamping ram in and out, and in the case of a large mold clamping

- 1 -

device, there gives rises to a problem in that at the time of opening and closing a mold, smooth flowing-in and out of pressure oil may not be obtained to fail carrying out mold opening and closing at a high speed.

SUMMARY OF THE INVENTION

This invention has been thought out in order to solve the problems noted above with respect to prior art. It is an object of this invention to provide a mold clamping device which can move a mold clamping ram at a high speed by a very simple construction.

It is a further object of the present invention to provide a mold clamping device wherein a passage provided with a valve member is provided over a cylinder front chamber and a cylinder rear chamber, pressure oil is supplied to a mold clamping cylinder through said passage, pressure oil in the cylinder front chamber is forced to flow toward the cylinder rear chamber to reduce hydraulic resistance on the side of the cylinder front chamber whereby the moving speed is not limited by resistance of piping and negative pressure is not produced within the cylinder during the constrained mold closing.

For achieving the above-described objects, the present invention provides a mold clamping device comprising a mold clamping cylinder wherein an inner diameter of a cylinder rear chamber is formed to be larger than an inner diameter of a cylinder front chamber and a flowing clearance is formed between the peripheral wall of the cylinder rear chamber and a piston, said piston having an outer diameter fitted for said cylinder front chamber and having a front and a rear portions with a mold clamping ram and a booster ram coaxially disposed, an improvement wherein a charge cylinder provided with a piston rod operatively connected to the mold clamping ram is arranged relative to said mold clamping cylinder to be communicated with the cylinder front chamber, and a charge area of the charge cylinder is formed to be smaller than an end area of the mold clamping ram at the rear surface of the piston to reduce a quantity of oil during movement of the mold clamping ram to render possible the movement of the mold clamping ram at a high speed, thus overcoming the above-described prior problems.

In the mold clamping mechanim of the type as described above, upon movement of the piston, pressure oil from the flowing clearance flows into the cylinder chamber on the pressurized side. The high-speed mold opening is effected by the booster ram whereas the high-speed mold closing is effected by pressure oil supplied into the cylinder via a passage having a large aperture. At this time, a hydraulic force exerts on both surfaces of the piston but since the outer diameter of the booster ram is smller than that of the mold clamping ram and there exists a difference in pressure receiving surface of the piston, the constrained mold closing is effected by a differential generated thereat.

Further, the front end of the piston is in contact with the cylinder front chamber, and the cylinder rear chamber is partitioned from the cylinder front chamber by the piston, and therefore, pressure oil on the side of the cylinder front chamber flows toward the cylinder rear chamber from the passage under the pressure on the side of the cylinder rear chamber to reduce hydraulic resistance in the cylinder front chamber.

Furthermore, when the piston moves through the cylinder front chamber and reaches a mold clamping position, the passage on the side of the cylinder front chamber is connected to a drain, and the passage is cutoff by the valve member and when the pressure oil is supplied to the cylinder rear chamber, the mode is switched to mold clamping.

## BRIEF DESCRIPTION OF THE DRAWINGS

The drawings schematically show one embodiment of a mold clamping device for an injection molding machine according to this invention;

FIG. 1 is a sectional view at the time of opening a mold;

FIGS. 2 and 3 are respectively sectional views at the time of closing a mold; and

FIG. 4 is a partial sectional view showing an open state of a valve member.

## BEST MODE FOR EMBODYING THE INVENTION

In the Figures, the reference numeral 1 designates a mold clamping cylinder in which an inner diameter of a cylinder rear chamber 1b is formed to be larger than an inner diameter of a cylinder front chamber 1a.

A piston 2 has an outer diameter suited for the cylinder front chamber 1a, to the front portion of which is connected a mold clamping ram 3 while to the rear portion thereof connected coaxially therewith a booster ram 4 having a smaller diameter than that of the mold clamping ram 3.

The mold clamping ram 3 and the booster ram 4 extend through the side wall of the cylinder and protrude outside, and a movable plate 6 which is moved while being guided by a tie bar 5 is connected to the front end of the mold clamping ram 3. Into the booster ram 4 are inserted a piston rod 8 having a hydraulic passage 7 and a piston 9 at the front end thereof, the piston rod 8 having its rear end secured to a support member 10 mounted on the

- 5 -

side wall at the rear of the cylinder.

A passage 11 having a large aperture provided on the cylinder side is provided over the cylinder front chamber 1a and frontwardly of the cylinder rear chamber 1b, the passage 11 having a passage 11a on the cylinder front chamber side and a passage 11b on the cylinder rear chamber side, which passages 11a and 11b can be cutoff by a valve member 12 provided on the passage 11b on the cylinder rear chamber side.

The valve member 12 constitutes a check valve which is always biased in a direction of closing a valve by means of a spring member 13, said spring member 13 being suitably adjusted in pressure by a screw member 14. The valve member 12 is formed in its side with a flow hole 16 for pressure oil from a hydraulic circuit 15.

This valve member 12 is opened when pressure of the passage 11a on the cylinder front chamber side becomes higher than the spring pressure or by an operating device 17 provided opposedly of the valve member 13, the operating device 17 being composed of a hydraulic cylinder 18 and a rod 20 within a passage connected to a piston 19.

The hydraulic circuit 15 is connected to a hydraulic circuit 7 of the booster ram 4 with switching valves 21, 22, 23 and 24 provided on the passage 11 and the operating device 17.

In the Figures, the reference numeral 25 designates a fixed plate; 26 and 27 molds; and 28 and 29 limit switches for adjusting a mold thickness.

The operation will be described hereinafter.

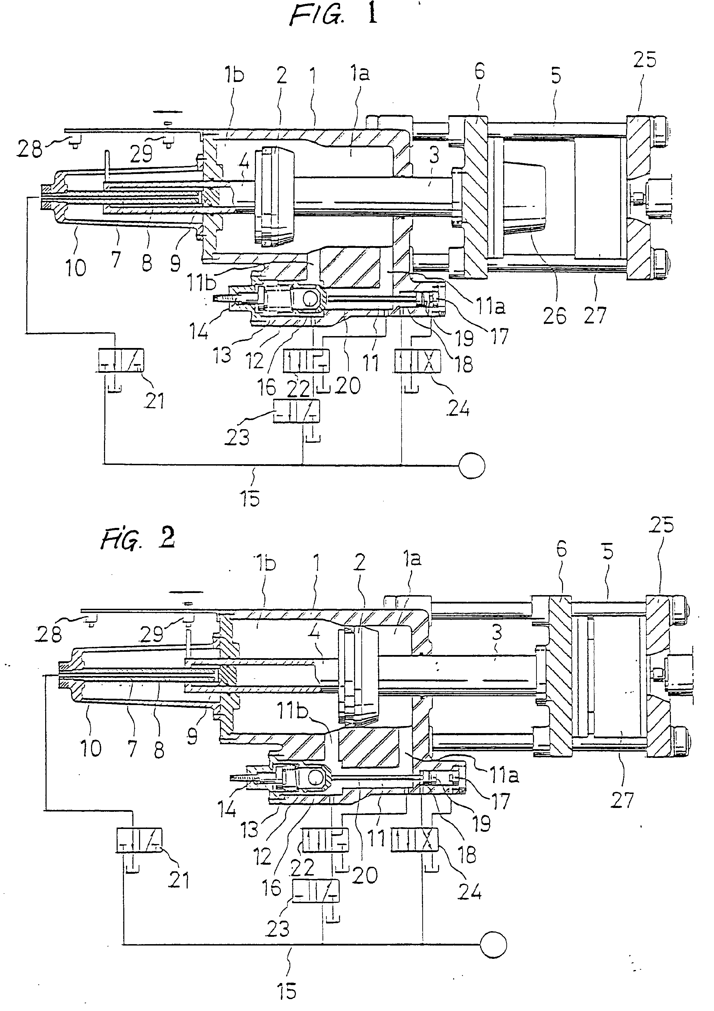

In the mold-open state shown in FIG. 1, when oil pressure is supplied to the cylinder rear chamber 1b, a differential is generated due to a difference in pressure receiving areas of the front and rear surfaces of the piston, and the piston 2 is constrained-moved to the cylinder front chamber 1a to effect mold-closing. At this time, a part of oil pressure which is in the moving direction flows toward the cylinder rear chamber 11b from the flowing clearance around the piston 2 to reduce the hydraulic resistance.

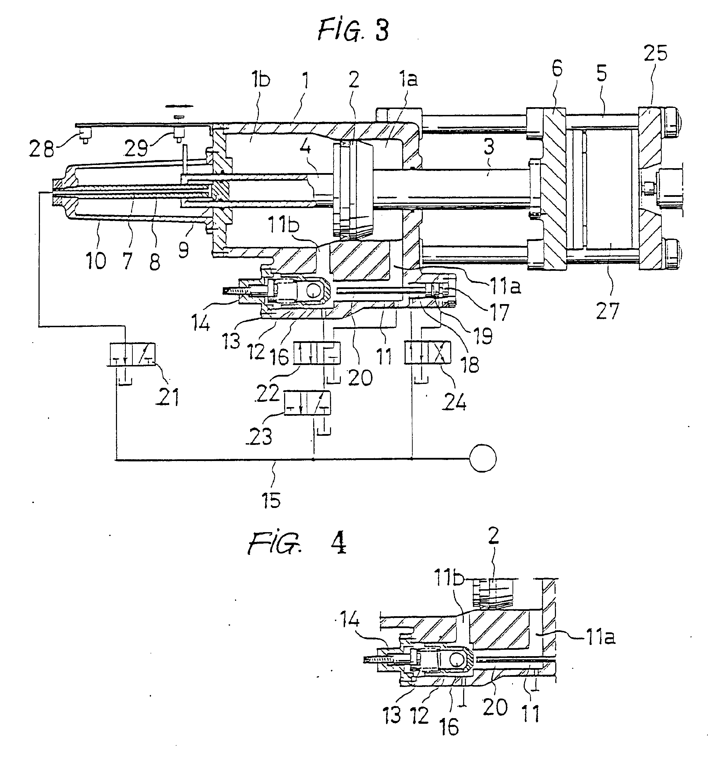

As shown in FIG. 2, when the front end of the piston 2 reaches the cylinder front chamber 1a, the piston 2 is fitted into the cylinder front chamber 1a to lose the aforesaid flowing clearance. At this time, however, when the operating device 17 is hydraulically operated to advance the rod 20, move backward the valve member 12 against the spring member 13 and open the passage 11, the cylinder front chamber 1a comes into communication with the cylinder rear chamber 1b so that the pressure oil in the cylinder front chamber 11a flows into the cylinder rear chamber 1b, because of which no great hydraulic resistance occurs thereat.

- 7 -

Next, when the operating device 17 is conversely hydraulically operated to return the rod 20 to its oritinal state, the valve member 12 returns to a balanced position between the spring pressure and the oil pressure, whereby the passage 11 becomes throttled to slow down the mold closing speed. At the time the forward movement of the piston 2 stops, the passage 11a on the cylinder front chamber side is connected to the drain by the switching valve 22, the lowering of the hydraulic pressure causes the valve member 12 to cutoff the passage 11 so that the cylinder rear chamber side is unilaterally pressurized to assume a mold clamping state.

## INDUSTRIAL AVAILABILITY

As described above, in the mold clamping device according to the present invention, the cylinder front chamber is brought into communication with the cylinder rear chamber by the passage having a large aperture at the side of the mold clamping cylinder to enable reducing the hydraulic resistance in the cylinder front chamber at the time of closing a mold, as a consequence of which the high-speed mold opening and closing and mold clamping can be carried out smoothly, and the device is simple in construction and involves less trouble. The mold clamping device of this invention has various great advantages as noted and can be widely utilized in the industry of molding synthetic resins.

00309584

WHAT IS CLAIMED IS:

1.    A mold clamping device comprising a mold clamping cylinder wherein an inner diameter of a cylinder rear chamber is formed to be larger than an inner diameter of a cylinder front chamber and a flowing clearance is formed between the peripheral wall of the cylinder rear chamber and a piston, said piston having an outer diameter fitted for said cylinder front chamber and ahving a front and a rear portions with a mold clamping ram and a booster ram coaxially disposed, characterized in that a charge cylinder provided with a piston rod operatively connected to the mold clamping ram is arranged relative to said mold clamping cylinder to be communicated with the cylinder front chamber, and a charge area of the charge cylinder is formed to be smaller than an end area of the mold clamping ram at the rear surface of the piston to reduce a quantity of oil during movement of the mold clamping ram to render possible the movement of the mold clamping ram at a high speed.

2.    A mold clamping device according to claim 1 wherein said passage having a large aperture provided on the side of the cylinder is provided over said cylinder front chamber and forwardly of the cylinder rear chamber, and said passage comprises a passage on the cylinder front chamber side

- 9 -

and a passage on the cylinder rear chamber side which are cutoff by a valve member in the form of a check valve always biased in a direction of closing a valve by means of a spring member capable of being suitably adjusted in pressure by a screw member, said valve member being bored at the side thereof with a flow hole for pressure oil from a hydraulic circuit.

3.     A mold clamping device for an injection molding machine according to claim 1 wherein said hydraulic operating device provided on the cylinder front chamber side of said passage having a large aperture comprises a hydraulic cylinder and piston, and an operating rod within the passage connected to said piston and provided opposedly of said valve member.

4.     A mold clamping device for an injection molding machine according to claim 1 wherein the piston rod of said booster ram is secured to the rear wall of the mold clamping cylinder.

FIG. 1

FIG. 2

*FIG. 3*

*FIG. 4*

# INTERNATIONAL SEARCH REPORT 00309584

International Application No PCT/JP87/00896

## I. CLASSIFICATION OF SUBJECT MATTER (if several classification symbols apply, indicate all) [3]

According to International Patent Classification (IPC) or to both National Classification and IPC

Int.Cl$^4$  B29C45/67, B29C45/80

## II. FIELDS SEARCHED

### Minimum Documentation Searched [4]

| Classification System | Classification Symbols |
| --- | --- |
| IPC | B29C45/67, B29C45/80, B22D17/26 |

Documentation Searched other than Minimum Documentation
to the Extent that such Documents are Included in the Fields Searched [6]

| | |
| --- | --- |
| Jitsuyo Shinan Koho | 1959 – 1986 |
| Kokai Jitsuyo Shinan Koho | 1971 – 1986 |

## III. DOCUMENTS CONSIDERED TO BE RELEVANT [14]

| Category [*] | Citation of Document, [16] with indication, where appropriate, of the relevant passages [17] | Relevant to Claim No. [18] |
| --- | --- | --- |
| Y | JP, A, 47-22457 (Matsuda Seisakusho Co., Ltd.) 7 October 1972 (07. 10. 72) Claim, column 2, line 8 to column 3, line 17, Fig. 1 (Family: none) | 1-4 |
| Y | JP, A, 60-143915 (Aoki Katashi) 30 July 1985 (30. 07. 85) Claim, Fig. 1 (Family: none) | 1-4 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents. such combination being obvious to a person skilled in the art

"&" document member of the same patent family

## IV. CERTIFICATION

| Date of the Actual Completion of the International Search [2] | Date of Mailing of this International Search Report [2] |
| --- | --- |
| January 14, 1988 (14.01.88) | January 25, 1988 (25.01.88) |
| International Searching Authority [1] | Signature of Authorized Officer [20] |
| Japanese Patent Office | |

Form PCT/ISA/210 (second sheet) (October 1977)